# EUROPÄISCHE PATENTSCHRIFT

(11) **EP 2 587 492 B1**
(45) Veröffentlichungstag und Bekanntmachung des Hinweises auf die Patenterteilung: **01.03.2017**
(21) Anmeldenummer: 11306393.7
(22) Anmeldetag: 27.10.2011
(51) Int. Cl.: H01B 12/16, F25D 3/10

(54) **Vorrichtung zum Kühlen mindestens eines supraleitfähigen Kabels**
Device for cooling at least one superconductive cable
Dispositif de refroidissement d'au moins un câble supraconducteur

(43) Veröffentlichungstag der Anmeldung: 01.05.2013
(73) Patentinhaber: Nexans, 75008 Paris (FR)
(72) Erfinder: Schippl, Klaus, 30659 Hannover (DE); Di Palma, Michele, 31832 Springe (DE)
(74) Vertreter: Döring, Roger

(56) Entgegenhaltungen:
- EP-A1- 2 328 156
- EP-A1- 2 339 593
- WO-A1-03/085682
- US-A1- 2006 283 620

## Beschreibung

Die Erfindung bezieht sich auf eine Vorrichtung zum Kühlen mindestens eines elektrischen Kabels, das in einem zur Aufnahme eines Kühlmittels geeigneten, thermisch isolierten Kryostat angeordnet ist, welcher neben dem Kabel einen Hohlraum zum Durchleiten des Kühlmittels umschließt, bei welcher der Kryostat an mindestens einem Ende zu einem einen Endverschluß für das Kabel umschließenden, vakuumisolierten Gehäuse erweitert ist, das an einen Kühlmittelvorrat angeschlossen ist (EP 2 328 156 A1).

Die Vorrichtung wird in bevorzugter Ausführungsform zum Kühlen mindestens eines supraleitfähigen Kabels eingesetzt. Ein solches Kabel hat in der heutigen Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise mit seltenen Erden dotierte Materialien, die unter der Bezeichnung ReBCO (Rare-earth-Barium-Kupfer-Oxid) bekannt geworden sind, zu denen insbesondere YBCO (Yttrium-Barium-Kupfer-Oxid) gehört. Ein anderes dieser supraleitfähigen Materialien ist beispielsweise BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Aus der eingangs erwähnten EP 2 328 156 A1 gehen ein Verfahren uns eine entsprechende Vorrichtung zum Kühlen mindestens eines supraleitfähigen Kabels hervor, das von einem Kryostat umgeben ist, welcher aus zwei konzentrisch zueinander angeordneten, eine Vakuumisolierung zwischen sich einschließenden metallischen Rohren besteht und welcher neben dem Kabel einen Hohlraum zum Durchleiten eines unter Druck stehenden Kühlmittels umschließt. Bei dieser Vorrichtung sind zumindest an einem Ende des Kryostats ein Endenabschluß für das Kabel und ein mit dem Kryostat verbundener Vorratsraum für das flüssige Kühlmittel angeordnet. Das Kühlmittel wird beim Betrieb der Vorrichtung mittels einer Pumpe in den Kryostat hineingedrückt. Durch den Einsatz der Pumpe mit zugehörigem Rohrsystem ist diese bekannte Vorrichtung relativ aufwendig.

Der Erfindung liegt die Aufgabe zugrunde, die eingangs geschilderte Vorrichtung so zu gestalten, daß das supraleitfähige Kabel mit vermindertem Aufwand gekühlt werden kann.

Diese Aufgabe wird gemäß der Erfindung dadurch gelöst,
- daß oberhalb des Kryostats ein das Kühlmittel enthaltender, vakuumisolierter Behälter angeordnet ist, der mit dem Kühlmittelvorrat verbunden ist, und
- daß zwischen dem Behälter und dem Hohlraum des Kryostats zwei konzentrisch zueinander verlaufende Rohre angeordnet sind, die an beiden Enden offen sind und mit einem Ende in den Hohlraum des Kryostats sowie mit dem anderen Ende bis in das im Behälter befindliche Kühlmittel hineinragen.

Das Wort "Kryostat" umfaßt einen rohrförmigen Teil desselben, in welchem mindestens ein supraleitfähiges Kabel angeordnet ist, aber auch das den Endverschluß umschließende erweiterte Gehäuse, in welches der rohrförmige Teil des Kryostats übergeht. "Kryostat" kann auch ein thermisch isoliertes Gehäuse sein, das einen Normalleiter umschließt, welcher mit dem Endverschluß verbunden ist. Der das Kühlmittel enthaltende Behälter der Vorrichtung nach der Erfindung wird in bevorzugter Ausführungsform in Kombination mit dem Gehäuse eingesetzt. Er kann aber auch im Bereich des rohrförmigen Teils des Kryostats, also im Verlauf der Übertragungsstrecke, verwendet werden oder im Zusammenhang mit dem den Normalleiter umschließenden Gehäuse.

Bei Einsatz dieser Vorrichtung wird der Hohlraum des Kryostats ohne die Verwendung zusätzlicher Aggregate ständig mit einem auf Solltemperatur befindlichen Kühlmittel versorgt, solange in dem oberhalb des Gehäuses bzw. des Endverschlusses angeordneten Behälter eine ausreichende Menge Kühlmittel vorhanden ist. Das dem Behälter aus dem Kühlmittelvorrat ständig zugeführte Kühlmittel fällt beim Betrieb der Vorrichtung wegen seines Eigengewichts aus dem Behälter durch das innere Rohr der beiden konzentrischen Rohre in den Hohlraum des Kryostats. Durch innerhalb des Kryostats entstehende Wärme verdampft ein Teil des Kühlmittels im Kryostat. Es steigt wegen seines dadurch verminderten spezifischen Gewichts zusammen mit beim Verdampfungsvorgang entstehenden Gasblasen durch das äußere Rohr der beiden konzentrischen Rohre nach oben bis in den Behälter.

Die Erwärmung des Kühlmittels im Kryostat entsteht im wesentlichen durch Strahlungswärme, welche von außen in den Hohlraum des Kryostats gelangt. Eine solche Erwärmung kann auch durch eine sehr gute Vakuumisolierung nicht vermieden werden. Auch vom Leiter des supraleitfähigen Kabels wird bei dessen Betrieb Wärme erzeugt, die zum Verdampfen des Kühlmittels beiträgt. Die beim Verdampfungsvorgang entstehenden Gasblasen bzw. das entsprechende Gas werden bzw. wird aus dem Behälter abgeleitet. Das Kühlmittel wird im Behälter wieder auf Solltemperatur abgekühlt. Es entsteht auf diese Weise zwischen dem Behälter und dem Kryostat ein von den beiden konzentrischen Rohren geführter, sich selbst erhaltender Kreislauf von Kühlmittel einerseits und Gemisch aus Kühlmittel und Gasblasen andererseits.

Ausführungsbeispiele des Erfindungsgegenstandes sind in den Zeichnungen dargestellt. Dabei wird die Erfindung zunächst für die Kühlung mindestens eines supraleitfähigen Kabels erläutert.

Es zeigen:
Fig. 1 in schematischer Darstellung eine Übertragungsstrecke mit einem supraleitfähigen Kabel.
Fig. 2 einen Schnitt durch Fig. 1 längs der Linie II - II in vergrößerter Darstellung.
Fig. 3 eine in einer Übertragungsstrecke nach Fig. 1 einsetzbare Vorrichtung nach der Erfindung.
Fig. 4 einen Schnitt durch Fig. 3 längs der Linie IV - IV in vergrößerter Darstellung.
Fig. 5 die Vorrichtung nach Fig. 3 mit einer abgewandelten Ausführungsform der Übertragungsstrecke.

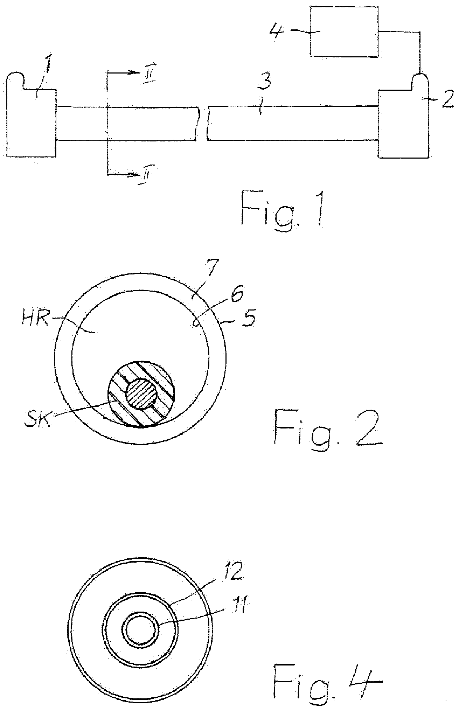

Die Übertragungsstrecke nach Fig. 1 weist zwei nicht mit dargestellte Endverschlüsse umschließende Gehäuse 1 und 2 auf, die von einem vakuumisolierten Kryostat umgeben sind und zwischen denen ein rohrförmiger, mindestens ein supraleitfähiges elektrisches Kabel SK (Fig. 2) enthaltender Teil 3 des Kryostats angeordnet ist. An das Gehäuse 2 ist ein Vorratsbehälter 4 angeschlossen, in dem sich ein Kühlmittelvorrat befindet.

Der aus rohrförmigem Teil 3 und Gehäuse 1 bzw. 2 bestehende Kryostat ist vakuumisoliert. Er besteht im dargestellten Ausführungsbeispiel in seinem rohrförmigen Teil 3 aus zwei koaxial zueinander angebrachten Rohren 5 und 6 aus Metall, vorzugsweise aus Edelstahl, zwischen denen sich eine Abstandshalterung und eine Vakuumisolierung 7 befinden. Im Teil 3 des Kryostats ist im dargestellten Ausführungsbeispiel ein supraleitfähiges Kabel SK untergebracht. Der Kryostat umschließt außerdem insgesamt einen Hohlraum HR, durch welchen ein Kühlmittel geleitet werden kann. Das Kühlmittel hat eine Solltemperatur von beispielsweise 80 K, die ausreicht, um den supraleitfähigen Leiter des Kabels SK in den supraleitfähigen Zustand zu überführen.

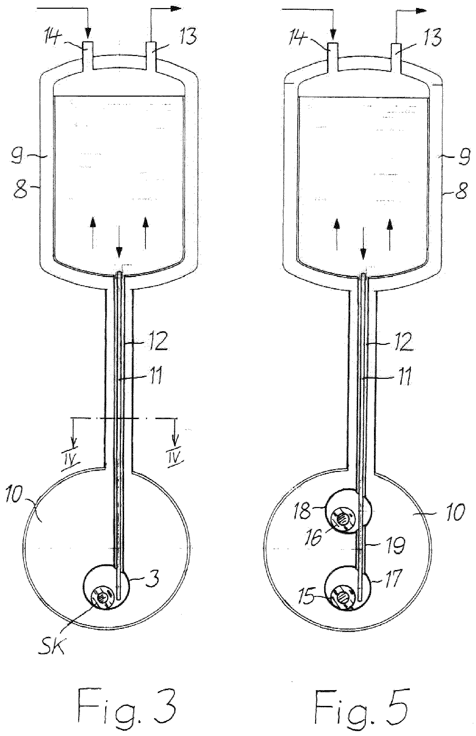

Oberhalb des Gehäuses 2 ist ein in den Fig. 3 und 5 dargestellter vakuumisolierter Behälter 8 angebracht, der ein auf Solltemperatur befindliches Kühlmittel enthält und mit dem Vorratsbehälter 4 verbunden ist. Das Vakuum der Vakuumisolierung 9 des Behälters 8 kann mit dem Vakuum 10 des Gehäuses 2 verbunden sein, so wie es in den Fig. 3 und 5 dargestellt ist. Die beiden Vakuumisolierungen 9 und 10 können aber auch voneinander getrennt sein, wenn zwischen Behälter 8 und Gehäuse 2 beispielsweise eine der vereinfachten Montage dienende Steckkupplung angeordnet ist. Der Behälter 8 kann - wie bereits erwähnt - auch mit dem rohrförmigen Teil 3 des Kryostats verbunden werden.

Zwischen dem Behälter 8 und dem Hohlraum HR des Kryostats sind zwei konzentrisch zueinander angeordnete Rohre 11 und 12 angebracht, die an beiden Enden offen sind und mit ihrem einen Ende bis in den Hohlraum HR des Kryostats und mit ihrem anderen Ende bis in das im Behälter 8 befindliche Kühlmittel hineinragen.

Die Vorrichtung nach Fig. 3 arbeitet beispielsweise wie folgt:
Nach dem Öffnen eines der Einfachheit halber nicht mit dargestellten Ventils strömt Kühlmittel aus dem Behälter 8 durch die Rohre 11 und 12 in den Hohlraum HR des Kryostats, so daß der Leiter des Kabels SK in den supraleitfähigen Zustand überführt wird. Wenn der ganze Hohlraum innerhalb des Kryostats, also innerhalb dessen Teil 3 und innerhalb des Gehäuses 2 mit Kühlmittel gefüllt ist, beginnt dasselbe aufgrund der durch Strahlung von außen bedingten Erwärmung zu verdampfen. Da diese Erwärmung sich auch auf das äußere Rohr 12 auswirkt, beginnen verdampftes Kühlmittel und Gasblasen durch das äußere Rohr 12 aufzusteigen. Das wird nicht nur durch die Erwärmung des Rohres 12 unterstützt, sondern auch durch dessen relativ großen lichten Querschnitt. Dieser Effekt wird noch erhöht, wenn das Kabel SK an Spannung angeschlossen wird, so daß auch sein Leiter erwärmt wird und dementsprechend Wärme abgibt. Das erwärmte Kühlmittel mit jetzt vermindertem spezifischem Gewicht steigt also zusammen mit den Gasblasen durch das äußere Rohr 12 bis in den Behälter 8 auf. Die Gasblasen bzw. das Gas werden bzw. wird durch einen Anschluß 13 abgeleitet. Das Kühlmittel wird innerhalb des Behälters 8 wieder auf Solltemperatur abgekühlt.

Während das Gemisch aus Kühlmittel und Gasblasen im geschilderten Sinne durch das Rohr 12 aufsteigt, fällt gleichzeitig eine korrespondierende Menge von auf Solltemperatur gekühltem Kühlmittel durch das Rohr 11 bis in den Hohlraum HR des Kryostats nach unten. Dadurch entsteht ein durch die beiden Rohre 11 und 12 geführter Kreislauf von Kühlmittel einerseits sowie Kühlmittel und Gasblasen andererseits, der ohne Unterstützung durch zusätzliche Aggregate solange aufrechterhalten bleibt, wie innerhalb des Hohlraums des Kryostats eine für das Verdampfen des Kühlmittels ausreichende Erwärmung desselben gegeben ist. Der Kühlmittelvorrat im Behälter 8 wird beim Betrieb der Vorrichtung über einen Zulauf 14 aus dem Vorratsbehälter 4 ergänzt.

Die gleiche Wirkungsweise der Vorrichtung, wie sie für Fig. 3 geschildert ist, gilt auch dann, wenn in dem Kryostat gemäß Fig. 5 zwei supraleitfähige elektrische Kabel 15 und 16 mit einem eigenen, von einem Innenrohr 17 bzw. 18 begrenzten rohrförmigen Teil 3 vorhanden sind. Das innere Rohr 11 ist hier bis zu dem weiter unten liegenden Kabel 15 geführt. Es endet innerhalb des Innenrohrs 17 desselben. Die beiden Innenrohre 17 und 18 sind über einen Abschnitt 19 des äußeren Rohres 12 miteinander verbunden, das vom Innenrohr 18 ausgehend bis in den Behälter 8 hineinragt. Die Vorrichtung ist auch dann einsetzbar, wenn in dem rohrförmigen Teil 3 des Kryostats mehr als zwei supraleitfähige elektrische Kabel vorhanden sind.

Die im Vorangehenden geschilderte Vorrichtung ist auch in Kombination mit einem Gehäuse einsetzbar, das einen mit dem Endverschluß verbundenen Normalleiter umschließt und mit einem Kühlmittel gefüllt ist. Ein solcher, einen supraleitfähigen Leiter nach außen, also nach außerhalb des Endverschlusses führender Normalleiter wird im laufenden Betrieb erheblich erwärmt, so daß er zur Vermeidung von Verlusten gekühlt werden muß. Solche Verluste können in der Größenordnung von einigen 100 Watt liegen.

## Patentansprüche

1. Vorrichtung zum Kühlen mindestens eines elektrischen Kabels, das in einem zur Aufnahme eines Kühlmittels geeigneten, thermisch isolierten Kryostat angeordnet ist, welcher neben dem Kabel einen Hohlraum zum Durchleiten des Kühlmittels umschließt, bei welcher der Kryostat an mindestens einem Ende zu einem einen Endverschluß für das Kabel umschließenden, vakuumisolierten Gehäuse erweitert ist, das an einen Kühlmittelvorrat angeschlossen ist, **dadurch gekennzeichnet,**
- **daß** oberhalb des Kryostats ein das Kühlmittel enthaltender, vakuumisolierter Behälter (8) angeordnet ist, der mit dem Kühlmittelvorrat verbunden ist, und
- **daß** zwischen dem Behälter (8) und dem Hohlraum (HR) des Kryostats zwei konzentrisch zueinander verlaufende Rohre (11,12) angeordnet sind, die an beiden Enden offen sind und mit einem Ende in den Hohlraum (HR) des Kryostats sowie mit dem anderen Ende bis in das im Behälter (B) befindliche Kühlmittel hineinragen.

2. Vorrichtung nach Anspruch 1, **dadurch gekennzeichnet, daß** der Behälter (8) oberhalb des einen Endverschluß umschließenden Gehäuses (1,2) angeordnet ist.

3. Vorrichtung nach Anspruch 1, **dadurch gekennzeichnet, daß** der Behälter (8) über einem rohrförmigen Teil (3) des Kryostats angeordnet ist, welcher mindestens ein supraleitfähiges elektrisches Kabel (SK) enthält.

4. Vorrichtung nach Anspruch 1, **dadurch gekennzeichnet, daß** der Behälter über einem einen Normalleiter, welcher mit dem Endverschluß verbunden ist, umschließenden Kryostat verbunden ist, der ein Kühlmittel enthält.

## Claims

1. A device for cooling of at least one electrical cable which is arranged within a thermally insulated cryostat which comprises also a hollow space for the through passing of a cooling medium, wherein the cryostat is enlarged at least at one end in the form of a vacuum insula te d ho using which contains a termination for the cable and is connected to a store device for the cooling medium, **characterized in**
- **that** on top of the cryostata vacuum insulated container(8) is mounted which contains cooling medium and is connected to the store device, and
- **that** between the container(8) and the hollow space (HR) of the cryostat two tubes (11,12) are mounted which are arranged concentrically to each other, which are open atboth ends and which penetrate with their one end into the hollow space (HR) of the cryostat and with their other end into the cooling medium of the container(8).

2. Device according to claim 1, **characterized in that** the container (8) is positioned above the ho using (1,2) which surrounds a termination.

3. Device according to claim 1, **characterized in that** the container (8) is positioned above a tubular part (3) of the cryostat, which comprises at least one superconductive cable (SK).

4. Device according to claim 1, **characterized in that** the container is connected to a cryostat, which contains a coolant by a normal conducting c o nd uc to r, which is connected to the termination.

## Revendications

1. Procédé de refroidissement d'au moins un câble électrique, qui est disposé dans un cryostat thermiquement isolé convenant pour contenir un fluide de refroidissement, qui outre le câble entoure une cavité destinée au passage du fluide de refroidissement, dans lequel le cryostat est évasé à au moins une extrémité en un boîtier isolé sous vide entourant une fermeture d'extrémité pour le câble et qui est raccordé à un réservoir de fluide de refroidissement, **caractérisé en ce**
- **que** au-dessus du cryostat est disposé un récipient (8) isolé sous vide et contenant le fluide de refroidissement, qui est relié au réservoir de fluide de refroidissement, et
- **que** deux tubes (11, 12) s'étendant concentriquement l'un à l'autre sont disposés entre le récipient (8) et la cavité (HR) du cryostat, qui sont ouverts aux deux extrémités et qui pénètrent avec une extrémité dans la cavité (HR) du cryostat ainsi qu'avec l'autre extrémité jusque dans le fluide de refroidissement se trouvant dans le récipient (8).

2. Dispositif selon la revendication 1, **caractérisé en ce que** le récipient (8) est disposé au-dessus du boîtier (1, 2) entourant une fermeture d'extrémité.

3. Dispositif selon la revendication 1, **caractérisé en ce que** le récipient (8) est disposé au-dessus d'une partie tubulaire (3) du cryostat, qui contient au moins un câble supraconducteur (SK).

4. Dispositif selon la revendication 1, **caractérisé en ce que** le récipient est raccordé par un cryostat, qui contient un fluide de refroidissement, et qui entoure un conducteur normal, qui est raccordé à la fermeture d'extrémité.
